# EUROPEAN PATENT APPLICATION

(11) **EP 1 610 405 A2**
(43) Date of publication of application: **28.12.2005**
(21) Application number: 05253595.2
(22) Date of filing: 10.06.2005
(51) Int. Cl.: H01M 8/02

(54) **Carbon composite material for fuel cell separator, preparation thereof and fuel cell separator utilizing the same**

(30) Priority: 19.06.2004 KR 2004045887
(71) Applicant: Hankook Tire Co., Ltd., Gangnam-gu, Seoul 135-723 (KR)
(72) Inventor: Ahn, Jin Ho, Yuseong-gu Daejeon 305-721 (KR); Kim, Jeong Heon, Yuscong-gu Deajeon 305-768 (KR)
(74) Representative: Haley, Stephen

(57) **Abstract**

Disclosed is a method for producing a carbon composite material for a fuel cell separator, comprising dry homogenizing graphite powder as a conductive filler, a solid phenolic resin as a binder, and additives for improving physical properties, pouring the homogeneous mixture into a heated mold; and subjecting the homogeneous mixture to compression thermoforming. In accordance with the present invention, it is possible to prepare a carbon composite material for a fuel cell separator in a more simplified and efficient manner while requiring no preparation of intermediate materials such as granular particles and no graphitization treatment as used in conventional methods.

## Description

The present invention relates to a method for producing a carbon composite material for a fuel cell separator. More specifically, the present invention relates to a method for production of a carbon composite material whereby a fuel cell separator can be prepared in a more simplified and efficient manner without preparation of intermediate materials such as granular particles and no graphitization process as used in conventional methods.

Further, the present invention relates to a carbon composite material for a fuel cell separator prepared by the above-mentioned method and a fuel cell separator utilizing the same.

Separators in fuel cells are core components having important roles such as supplying hydrogen and oxygen to a membrane electrolyte assembly, serving as passages for transfer of electrons generated by catalytic reaction from the membrane electrolyte assembly, and isolating each unit cell to provide insulation therebetween.

The fuel cell separators require a certain level of mechanical strength, electrical conductivity, and gas permeability. Generally, metallic separators are used in fuel cells, but these suffer from severe corrosion at a contact area between the separator and electrolyte, thus causing reduction in performance and service life of fuel cells.

To cope with such problems, separators made of carbon materials having excellent anti-corrosiveness even under such circumstances have begun to emerge. Graphite is a representative material among such carbon-based separators. Graphite has both superior corrosion resistance and chemical resistance, and exhibits high electrical conductivity comparable to metals, thus receiving a great deal of attention as a substitute for metal separators.

However, graphite suffers from disadvantages such as difficulty of processing to desired shapes, thus presenting considerably higher processing costs than the material costs of graphite leading to increased production costs. Therefore, separators have been introduced which are made of carbon composite materials which are capable of being formed into desired shapes while maintaining the advantages, such as high chemical resistance and electrical conductivity, of graphite.

The separators made of carbon composite materials are generally prepared by mixing a carbon-based filler and a resin-based binder and subjecting the resulting mixture to compression molding or injection molding. The compression molding is a molding manner involving pouring raw materials into a mold having a predetermined shape and applying high pressure to the materials using a press. Whereas, the injection molding is a molding manner involving injecting and molding raw materials into a mold having a predetermined shape, using an injection molding machine. The compression molding is suitable for small-scale production of various kinds of molded articles due to relatively inexpensive mold costs, while the injection molding is suitable for large-scale production of a limited variety of molded articles.

European Patent No. 1 061 597, published on December 20, 2000 and assigned to Kawasaki Steel Corp., a Japanese company, has proposed a method for making a fuel cell separator, comprising mixing graphitized meso-carbon microbeads, a thermosetting resin or a thermoplastic resin, and at least one carbonaceous material selected from the group consisting of graphite powder, carbon black and fine carbon fiber, and subjecting the mixture to compression molding or injection molding, followed by graphitization.

In addition, European Patent No. 1 168 473, published on January 2, 2002 and assigned to Nippon Pillar Packing Co., Ltd., a Japanese company, has proposed a method of producing a separator for a fuel cell configured by mixing a binder, a carbon filler powder, and a staple fiber, forming the mixture into granular particles having a particle diameter of 0.03 to 5 mm, and molding the particles into a separator.

Therefore, the present invention has been made in view of the above problems, and it is an object of the present invention to provide a more simplified and efficient method for producing a carbon composite material for a fuel cell separator, comprising mixing a needle-like or plate-like natural or artificial graphite powder as a conductive filler, a modified or unmodified solid phenolic resin as a binder, and carbon black, acetylene black and carbon/metal/organic staple fiber as additives to improve physical properties, and molding the mixture under pressure of 100 to 1,000 kg/cm² for 30 to 1,800 sec to obtain a finished product, whereby there is no need for preparation of intermediate materials such as granular particles as in EP 1 168 473 and no graphitization treatment as in EP 1 061 597.

In accordance with an aspect of the present invention, the above and other objects can be accomplished by the provision of a method for producing a carbon composite material for a fuel cell separator, comprising dry homogenizing 70 to 95% by weight of a needle- or plate-like natural or artificial graphite powder having a particle size of 5 to 200 µm as a conductive filler, 5 to 30% by weight of a modified or unmodified solid phenolic resin as a binder, and, relative to the graphite powder, less than 30% by weight of carbon black, acetylene black, and carbon fiber, metal fiber and organic fiber each having a length of less than 3 mm as additives to improve physical properties, pouring the homogeneous mixture into a mold heated to a temperature of 100 to 250°C, and molding the homogeneous mixture under a pressure of 100 to 1,000 kg/cm² for 30 to 1,800 sec.

In accordance with another aspect of the present invention, there is provided a carbon composite material for a fuel cell separator prepared by the above-mentioned method.

In accordance with yet another aspect of the present invention, there is provided a fuel cell separator utilizing the carbon composite material prepared by the above-mentioned method.

The present invention provides a method for producing a carbon composite material for a fuel cell separator using a filler and a binder, i.e., a graphite powder and a phenolic resin respectively, as main materials, via compression thermoforming, a carbon composite material for a fuel cell separator prepared by such a method and a fuel cell separator utilizing the carbon composite material thus prepared.

The filler used in the present invention serves to impart electrical conductivity to the carbon composite material and for example, needle- or plate-like natural or artificial graphite powder is employed as the filler. The particle size of the graphite powder is preferably in the range of 5 to 200 µm. Higher purity of the graphite exerts superior electrical conductivity and chemical resistance. The quantities of the filler to be used are preferably in the range of 70 to 95% by weight.

In particular, use of the needle- or plate-like graphite powder, as in the present invention, can improve electrical conductivity by about 20% while reducing gas permeability by less than 1/1000, as compared to use of spherical graphite powder.

The binder used in the present invention serves to impart mechanical strength to the carbon composite material by binding the graphite powder thereto, and a solid phenolic resin is used as the binder, for example. In particular, both modified and unmodified phenolic resins may be employed as the binder. Preferably, the binder is used in an amount of 5 to 30% by weight.

In accordance with the present invention, use of the solid phenolic resin, as described above, enables dry mixing, results in no need for formation into granular particles and also provides substantial advantages in terms of equipment, time, and costs as compared to a wet mixing manner.

Additives in the present invention are used to improve electrical conductivity and mechanical strength of the carbon composite material. For example, carbon black, acetylene black, and carbon fiber, organic fiber and metal fiber each having a length of less than 3 mm, may be employed as additives. The contents of additives are preferably less than 30% by weight of the graphite powder. Addition of carbon black and acetylene black, as in the present invention, provides effects of 50% or higher improvement in electrical conductivity.

Mixing of the filler, binder and additives is performed as follows. Firstly, the natural or artificial graphite powder as the filler, the modified or unmodified solid phenolic resin as the binder, and carbon black, acetylene black, and carbon fiber, metal fiber and organic fiber each having a length of less than 3 mm, as additives to improve physical properties, are dry homogenized at the above-mentioned proper ratio. Then, the resulting mixture of these raw materials is poured into a mold that has been heated to a temperature of 100 to 250°C, and molded under pressure of 100 to 1,000 kg/cm² for 30 to 1,800 sec. Next, the molded material is released from the mold, thereby obtaining a carbon composite material for a fuel cell separator in accordance with the present invention.

The carbon composite material for the fuel cell separator in accordance with the present invention prepared by the above-mentioned method has physical properties as shown in table 1 below.

**Table 1**

| Density (g/cm³) | Electrical Conductivity (S/cm) | Flexural Strength (Mpa) | Gas Permeability (cm³/cm²/S) |
|---|---|---|---|
| 2.01 | 94.19 | 55.43 | 2.28 x 10⁻¹⁰ |

The method for producing the carbon composite material for a fuel cell separator in accordance with the present invention is a more simplified and efficient method with no need for preparation of intermediate materials such as granular particles as in EP 1 168 473 and no graphitization treatment as in EP 1 061 597.

In particular, use of the needle- or plate-like graphite powder in the present invention provides about 20% improvement in electrical conductivity, and gas permeability lowered to less than 1 / 1000, as compared to use of spherical graphite powder.

In addition, use of the solid phenolic resin enables dry mixing, results in no need for formation into granular particles and also provides remarkable advantages in terms of equipment, time, and costs as compared to a wet mixing manner.

Further, in the present invention, carbon black, acetylene black, and carbon fiber, organic fiber and metal fiber each having a length of less than 3 mm, are added to improve electrical conductivity and mechanical properties of the carbon composite material. Particularly, addition of carbon black or acetylene black leads to a more than 50% improvement in electrical conductivity.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method for producing a carbon composite material for a fuel cell separator, comprising:
dry homogenizing a graphite powder as a conductive filler, a solid phenolic resin as a binder, and additives for improving physical properties,
pouring the homogeneous mixture into a heated mold; and
subjecting the homogeneous mixture to compression thermoforming.

2. The method according to claim 1, wherein the graphite powder is needle- or plate-like natural or artificial graphite powder having a particle size of 5 to 200 µm and is used in the range of 70 to 95% by weight.

3. The method according to claim 1, wherein the phenolic resin is a modified or unmodified solid phenolic resin and is used in the range of 5 to 30% by weight.

4. The method according to claim 1, wherein the additives are carbon black, acetylene black, and carbon fiber, metal fiber and organic fiber each having a length of less than 3 mm, and are used in an amount of less than 30% by weight of the graphite powder.

5. The method according to claim 1, wherein the carbon composite material is prepared by dry homogenizing the raw materials, pouring the homogeneous mixture into a mold heated to a temperature of 100 to 250°C, and molding the homogeneous mixture under pressure of 100 to 1,000 kg/cm² for 30 to 1,800 sec.

6. A carbon composite material for a fuel cell separator prepared by the method according to any one of claims 1 through 5.

7. A fuel cell separator prepared utilizing the carbon composite material for a fuel cell separator of claim 6.
